# EUROPEAN PATENT SPECIFICATION

(11) **EP 2 804 440 B1**
(45) Date of publication and mention of the grant of the patent: **10.07.2019**
(21) Application number: 12864851.6
(22) Date of filing: 25.12.2012
(51) Int. Cl.: H04L 29/08

(54) **METHOD AND SYSTEM FOR MOBILE TERMINAL TO ACCESS THE NETWORK THROUGH CELL PHONE**
VERFAHREN UND SYSTEM FÜR MOBILE ENDVORRICHTUNG ZUM ZUGRIFF AUF EIN NETZWERK ÜBER MOBILTELEFONE
PROCÉDÉ ET SYSTÈME POUR QU'UN TERMINAL MOBILE PUISSE ACCÉDER À UN RÉSEAU VIA UN TÉLÉPHONE CELLULAIRE

(30) Priority: 12.01.2012 CN 201210008792
(43) Date of publication of application: 19.11.2014
(73) Proprietor: Huizhou TCL Mobile Communication Co., Ltd., Huizhou, Guangdong 516006 (CN)
(72) Inventor: ZHOU, Dan, Huizhou Guangdong 516006 (CN)
(74) Representative: Brachmann, Roland W.
(86) International application number: PCT/CN2012/087430
(87) International publication number: WO 2013/104252

(56) References cited:
- WO-A1-2010/123757
- CN-A- 101 753 445
- CN-A- 102 438 331
- US-A1- 2004 098 512
- US-A1- 2005 114 547
- US-A1- 2010 014 459
- US-B2- 7 039 033
- "Innominate Security Configuration Manager Quick Installation Guide / Working with Innominate mGuard ISCM Release 3.x.x Document Rev. 1.7", , 1 October 2005 (2005-10-01), pages 1-77, XP055063188, Retrieved from the Internet: URL:http://www.innominate.com/data/downloa ds/manuals/ISCM_3_innominate_mguard.pdf [retrieved on 2013-05-16]

## Description

The present invention relates to the field of mobile communications, and in particular to, a method and system for a mobile terminal to access the network through a cell phone.

WO 2010/123757 A1 refers to a handheld device that is capable of providing data tethering services while maintaining handheld service functions.

US 2004/0098512 A1 refers to Network Address and Port Translation (NAPT) gateways and introduces a method to extend the number of connections.

CN 101 753 445 A refers to a fast flow classification method based on keyword decomposition hash algorithm.

US 2005/0114547 A1 is directed to a fast and flexible NAPT system.

Currently, accessing the network through a cell phone has become a part of public life. People may browse news, listen to music or watch videos online through the cell phone, etc. However, some cell phones without enabling a network service cannot access the network due to the influence of network flow. Moreover, one cell phone cannot be operated through the network via other cell phones. In addition, the present computers all access the network through the cell phone via a PC dialing form. At this time, corresponding dialing software is required to be installed on the PC. When the PC is dialing, the cell phone cannot carry out network connection.

Therefore, the prior art still needs to be improved and developed.

A technical problem for the present invention to solve is to provide a method for a mobile terminal to access the network through a cell phone aiming at the foregoing defects of the prior art, so that the mobile terminal having a WIFI function realizes an NAT function and realizes to simultaneously access the network through a network enabled cell phone.

This problem is solved according to the features of the independent claim(s). Further embodiments result from the depending claims.

The technical solution adopted by the present invention to solve the technical problem is as follows:
A method for a mobile terminal to access the network through a cell phone comprises the steps of:
A. pre-establishing a connection management Hash table used for tagging a network address mapping relationship in a network enabled cell phone, wherein a Hash value in the connection management Hash table is equal to a modulus table length of a binary sum of a source address, a protocol type, a source port and a destination port;
B. establishing, by a mobile terminal, a point-to-point communication connection with the network enabled cell phone through WIFI, and sending a data packet of a destination server to the network enabled cell phone;
C. extracting, by the network enabled cell phone, an element group in the data packet sent by the mobile terminal at a network layer and saving the element group in a tuple structure, wherein the element group comprises a source address, a source port, a protocol type, a destination address and a destination port of the data packet;
D. carrying out, by the network enabled cell phone, source address NAT treatment on the element group, translating the source address of the data packet to an IP address for the dial-up networking of the cell phone, and distributing a dial-up networking port; and
E. connecting the network enabled cell phone to the destination server to communicate according to information of the treated element group.

In this regard, between the step C and the step D, the method further comprises the steps of:
- searching, by the network enabled cell phone, the connection management Hash table according to the element group, wherein searching the hash table is a hash-based lookup,
- determining whether a connection structure of the mobile terminal and the destination server exists in the connection management Hash table,
- defining the data packet as the first data packet and
- establishing a new connection structure in the Hash table if the connection structure does not exist in the connection management Hash table.

According to an embodiment, the step D of the method further comprises the following step of: saving the element group after being subjected to source address NAT treatment in the connection management Hash table in a form of tuple structure.

According to an embodiment, the method, when sending, by the destination server, a returned data packet to the mobile terminal, comprises the steps of:
- sending the returned data packet to the network enabled cell phone first,
- extracting, by the network enabled cell phone, the element group in the returned data packet and
- searching the connection management Hash table to find a corresponding tuple structure,
- modifying the returned data packet according to the tuple structure and
- sending the modified returned data packet to the mobile terminal.

A system is suggested for a mobile terminal to access the network through a cell phone, which comprises a mobile terminal and a network enabled cell phone, wherein
- the mobile terminal establishes a point-to-point communication connection with the network enabled cell phone through WIFI, and sends a data packet of a destination server to the network enabled cell phone;
- the network enabled cell phone is used for extracting an element group in the data packet sent by the mobile terminal at a network layer and saving the element group in a tuple structure; wherein, the element group comprises a source address, a source port, a protocol type, a destination address and a destination port of the data packet; moreover, the network enabled cell phone is used for carrying out source address NAT treatment on the element group, translating the source address of the data packet to an IP address for the dial-up networking of the cell phone, and distributing a dial-up networking port; and being connected to the destination server to communicate according to information of the treated element group;
- the destination server is used for being communicated with the mobile terminal and the network enabled cell phone;
- the network enabled cell phone comprises:
   - a Hash table establishing management module used for pre-establishing a connection management Hash table used for tagging a network address mapping relationship in a network enabled cell phone, wherein a Hash value in the connection management Hash table is equal to a modulus table length of a binary sum of a source address, a protocol type, a source port and a destination port;
   - wherein the network enabled cell phone is further used for searching the connection management Hash table according to the element group, wherein searching the hash table is a hash-based lookup, determining whether a connection structure of the mobile terminal and the destination server exists in the connection management Hash table, defining the data packet as the first data packet and establishing a new connection structure in the Hash table if the connection structure does not exist in the connection management Hash table.

According to an embodiment, the network enabled cell phone is used for saving the element group after being subjected to source address NAT treatment in the connection management Hash table in form of a tuple structure.

According to the system for a mobile terminal to access the network through a cell phone, the network enabled cell phone is further used for searching the connection management Hash table according to the element group, determining whether a connection structure of the mobile terminal and the destination server exists in the connection management Hash table, defining the data packet as the first data packet and establishing a new connection structure in the Hash table if the connection structure does not exist in the connection management Hash table.

According to the system for a mobile terminal to access the network through a cell phone, the network enabled cell phone is further used for extracting connection management information represented by the connection structure, monitoring whether the current network requires FTP extension monitoring, updating a current connection management status, and carrying out NAT treatment on the data packet to realize communications between the mobile terminal and the destination server if the connection structure exists in the connection management Hash table.

According to the method and system for a mobile terminal to access the network through a cell phone provided by the present invention, a function of using one cell phone as a gateway to enable another cell phone having WIFI or computer to access the network through the gateway cell phone is achieved since an NAT technology is adopted. Moreover, as the two devices share the same IP address to access the network, all the network flow is generated at the gateway cell phone, thus preventing any utilization cost of other devices; furthermore, the Hash table is dynamically established for the data packet in the present invention, which greatly accelerates the search speed of the data packet and the processing speed.

The aforementioned characteristics, features and advantages of the invention as well as the way they are achieved will be further illustrated in connection with the following examples and considerations as discussed in view of the figures.
- FIG.1: is a flow chart of a method for a mobile terminal to access the network through a cell phone according to the present invention.
- FIG.2: is a schematic view of a network structure taking FTP connection for example according to the present invention.
- FIG.3: is a structural schematic view of a Hash table in the method for a mobile terminal to access the network through a cell phone according to the present invention.
- FIG.4: is a structural view of a system for a mobile terminal to access the network through a cell phone according to the present invention.

To make the objective, technical solution and advantages of the present application more clear, the present invention is further described in details with reference to the drawings and embodiments hereinafter. It should be understood that the specific embodiments described here are merely used for explaining the present invention, but are not intended to limit the present invention.

The main concepts of the present invention are that: a mobile terminal is connected to a network enabled cell phone via a WIFI connection mode, and the network enabled cell phone is served as a gateway router; with the TCP/IP operating principle, element information such as source address, source port, protocol, destination address and destination port in a data packet, is processed when the data packet arrives at the network layer of the network enabled cell phone, then a Hash table is dynamically established for searching the network connection, and NAT treatment is carried out to the data packet, thus the mobile terminal may simultaneously access the network with the network enabled cell phone by the external network IP address of the network enabled cell phone.

NAT (Network Address Translation) network address translation refers to translate one address of an IP datagram into another address, so that a plurality of IP addresses share one IP address for connection.

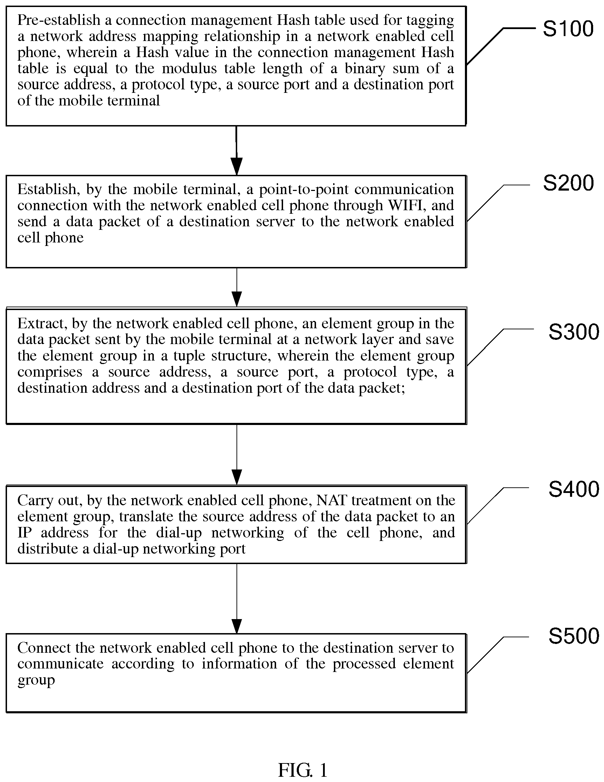

The present invention provides a method for a mobile terminal to access the network through a cell phone. Referring to FIG.1, the method comprises the following steps.

Step S100: Pre-establish a connection management Hash table used for tagging a network address mapping relationship in a network enabled cell phone, wherein a Hash value in the connection management Hash table is equal to a modulus table length of a binary sum of a source address, a protocol type, a source port and a destination port. In the embodiment, the binary of the source address, the protocol type, the source port and the destination port of the mobile terminal is summed first, and then a modulus operation is carried out according to the table length of the Hash table. The Hash value is namely equal to the value after modulus.

Step S200: Establish, by a mobile terminal, a point-to-point communication connection with the network enabled cell phone through WIFI, and send a data packet of a destination server to the network enabled cell phone.

Step S300: Extract, by the network enabled cell phone, an element group in the data packet sent by the mobile terminal at a network layer and save the element group in a tuple structure, wherein the element group comprises a source address, a source port, a protocol type, a destination address and a destination port of the data packet.

Step S400: Carry out, by the network enabled cell phone, source address NAT treatment on the element group, translate the source address of the data packet to an IP address for the dial-up networking of the cell phone, and distribute a dial-up networking port.

Wherein, the element group after being subjected to source address NAT treatment is saved in the connection management Hash table in a form of tuple structure.

Step S500: Connect the network enabled cell phone to the destination server to communicate according to information of the treated element group.

The method, wherein between the step S300 and the step S400, further comprises the steps of searching, by the network enabled cell phone, the connection management Hash table according to the element group, determining whether a connection structure of the mobile terminal and the destination server exists in the connection management Hash table, defining the data packet as the first data packet and establishing a new connection structure in the Hash table if the connection structure does not exist in the connection management Hash table. Moreover, the method further comprises the steps of extracting connection management information represented by the connection structure, monitoring whether the current network requires FTP extension monitoring, updating a current connection management status, and carrying out NAT treatment on the data packet to realize communications between the mobile terminal and the destination server if the connection structure exists in the connection management Hash table.

Further, the method comprises the steps of determining whether the data packet is data connection of other FTP control chains according to the new connection structure if a protocol in the element group is an FTP protocol, and carrying out destination address NAT treatment on the element group in the data packet if the data packet is the data connection of other FTP control chains.

The method, wherein after establishing a communication connection between the mobile terminal and the destination server, and when sending, by the destination server, a returned data packet to the mobile terminal, comprises the steps of sending the returned data packet to the network enabled cell phone first, extracting, by the network enabled cell phone, the element group in the returned data packet and searching the connection management Hash table to find a corresponding tuple structure, modifying the returned data packet according to the tuple structure and sending the modified returned data packet to the mobile terminal.

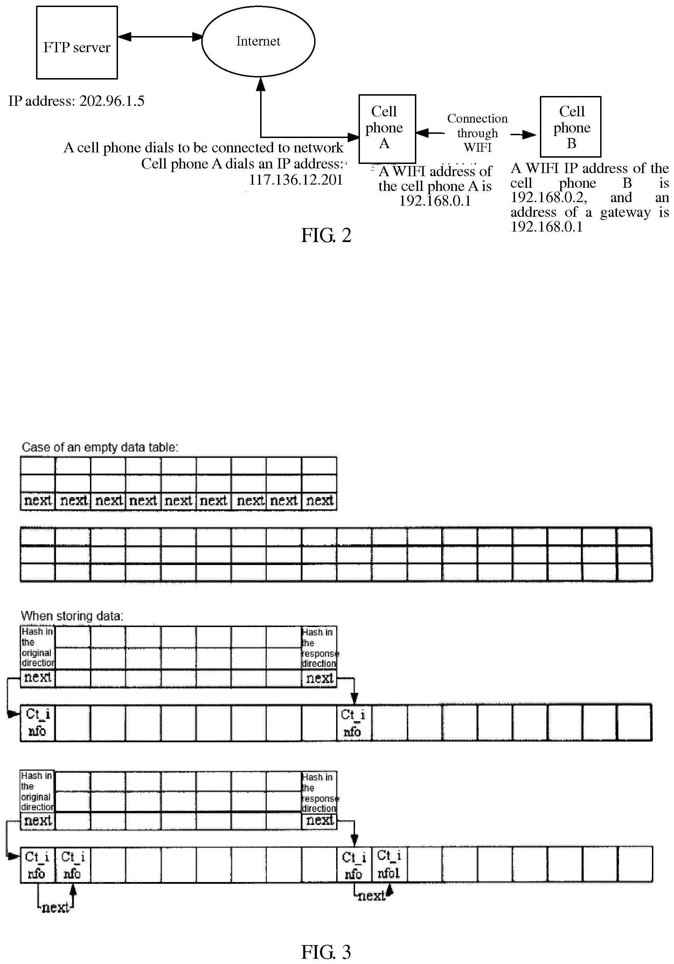

With reference to the foregoing method of the present invention, an entire networking implementation process is specifically analyzed by taking FTP connection for example, which is shown in a networking structure schematic view in FIG.2.

First, an IP address for the dial-up networking of a network enabled cell phone A is defined as 117.136.12.201, an IP address of a WIFI network card is defined as 192.168.0.1, and an address of an FTP server is defined as 202.96.1.5. If another cell phone B having an IP address of 192.168.0.2 that takes the network enabled cell phone A as a gateway needs to access a server having the IP address of 202.96.1.5, a source port is defined as 2345 and a destination port is defined as 21. Then, when the data packet is sent from the cell phone B to the cell phone A through the point-to-point network connection of the cell phone, and arrives at the network layer of the cell phone A, the cell phone A extracts an element group of the current data packet to form a new tuple structure, then the IP composition of the tuple structure is:
tuple.strcip = 192.168.0.2
tuple.strport_id = 2345
tuple.dstip = 202.96.1.5
tuple.dstport = 21
tuple.proto = tcp.

Connection management currently existing in the connection management Hash table is searched according to contents of the element group herein. Corresponding connection cannot be found according to the IP composition. Then, one index of an unused connection management table is distributed for the data packet, and whether the connection is an extension chain of other connections is searched.

As the information of the extension chain cannot be found, destination address NAT (DNAT) treatment is not required. However, because the data packet is sent from a WIFI port, source address NAT (SNAT) treatment is carried out on the data packet. The source address 192.168.0.2 is translated into the dial-up networking address 117.136.12.201 of the cell phone A. Moreover, one transmission port 7890 is distributed for the data packet. Then, the packet sent to the network is
117.136.12.201:7890 --- → 202.96.1.5:21.

At this time, a tuple structure in the response direction should be:
reply_tuple.strip = 202.96.1.5
reply_tuple.strport_id = 21
reply_tuple.dstip = 117.136.12.201
reply_tuple.dstport = 7890.
Reply_tuple.proto = tcp.

Thereafter, two tuple structures are saved in the connection management Hash table, and contents of the data packet are modified. The data packet is modified as
117.136.12.201:7890 -- → 202.96.1.5:21.

A second data packet
(202.96.1.5:21- → 117.136.12.201:7890 syn+ack)
is defined. That is, the FTP server sends the data packet to the cell phone B. The FTP server first sends the data packet to the network enabled cell phone A. The network enabled cell phone A after receiving the data packet, extracts an element group in the data packet to form a new tuple structure, which is represented as:
tuple.strcip = 202.96.1.5
tuple.strport_id = 21
tuple.dstip = 117.136.12.201
tuple.dstport = 7890
tuple.proto = tcp.

The network enabled cell phone A searches the connection management Hash table according to the tuple structure, and may find a tuple structure matched thereof, and then detects whether connection contents are included in the tuple structure. While the tuple structure does not have the connection contents, then the data packet is modified as:
202.96.1.5:21- → 192.168.0.2:2345
according to the foregoing NAT information, and the data packet is sent to the cell phone B. Afterwards, the connection contents are updated.

Further, if a user wants to download files from the FTP server, the FTP server may send a section of contents to the user, for example:
227 Entering Passive Mode (202, 96.4, 1, 5, 89).

Then a treatment flow is as follows:
The foregoing second data packet
(202.96.1.5:21- → 117.136.12.201:7890 syn+ack)
is sent to the cell network enabled cell phone A by the FTP server. The network enabled cell phone A after receiving the data packet, extracts the element group in the data packet to form a new tuple structure, which is represented as:
tuple.strcip = 202.96.1.5
tuple.strport_id = 21
tuple.dstip = 117.136.12.201
tuple.dstport = 7890
tuple.proto = tcp

The network enabled cell phone A, by searching the connection management Hash table according to the tuple structure, can find the corresponding tuple structure and detect that the current data packet is the data packet in the answering direction. Moreover, the current connection is a connection of the FTP having an extension chain. Then a character string 227 and a PROT field are matched to extract an IP address and a port of the new connection, wherein the tuple structure extracted here is:
New_tuple.dstip = 202.96.1.5
New_tuple.port = 5 * 256 +89 = 1369
New_tuple.srcip = 192.168.0.2
New_tuple.proto = tcp.

An idle connection is extracted from an extension chain structure table and distributed to this connection, and the two connections are associated.

Further, another data packet is sent from the cell phone B to the FTP server, which is represented as:
192.168.0.2:8989 --- → 202.96.1.5: 1369,
then the network enabled cell phone A after receiving the data packet, extracts the element group in the data packet to form a new tuple structure, which is represented as:
tuple.strcip = 192.168.0.2
tuple.strport_id = 8989
tuple.dstip = 202.96.1.5
tuple.dstport = 1369
tuple.proto = tcp.

The connection management currently existing in the connection management Hash table is searched according to the contents of the element group herein. Because the corresponding connection cannot be found, one index of an unused connection management table is distributed for the data packet, and whether the connection is an extension chain of other connections is checked. Because the information is already added into the extended connection management Hash table when searching the extension chain according to the element group, it can be found that this connection is the extension chain of other connections. Then this connection is bound with the connection established when the FTP server transmits a downloaded data packet to the cell phone B. Because this connection is an extension chain, NAT information of a truck chain table is read. If this connection is of a PORT type, then information of DNAT is obtained. Because this connection is of a 227 type, DNAT treatment is not needed according to the information of the truck chain table. At this time, the data packet is detected to be sent from a WIFI port, then SNAT treatment is carried out, and the information of the trunk chain table is read again to obtain the NAT information of the trunk chain table and replace the information of this connection, and adjust a new port according to that whether the port is used. While subsequent treatment is the same as the treatment of the first data packet.

Further, an establishing and connection management process of the connection management Hash table in the present invention is specifically analyzed hereinafter.

A structure of a header Hash table (hash table) is:

```
      typedef_packed union hash_table
      {
             Struct
      {
                     U32 mutex:10;
                     U32 next:22;
      }; U32 value;
      }u_hash_table;
```

The size of the Hash table is MAX_CONNTRACK, and the Hash value = the entry number of (source IP of an initiator + a source IP protocol of the initiator + source port + destination port) % table (namely, the table length). When the protocol is an ICMP protocol, the destination port adopts protocol type and code to evaluate.

The hash table of the connection management information is an empty row, is eventuated as u_ip_conntrack_tuple, called as a node chain table and the size of the table is MAX_CONNTRAC*2.

Referring to a Hash table structural view shown in FIG.3, a header node is a hash table, and the u_ip_conntrack_tuple is stored in a large array structure, wherein the size of the table is 2 times of that of the hash table.

When a data packet arrives, an empty u_ip_conntrack_tuple space is distributed first. Then the next of a response value of the header hash table is pointed at the current position of the u_ip_conntrack_tuple array. Moreover, the u_ip_conntrack_tuple in the response direction is arranged at the position in the original direction after MAX_CONNTRACK is added, and the next pointer of an HASH header node in the response direction is pointed at this node. When data from the response direction arrives, a response node can be found according to the next of the header hash; moreover, the original node can be found by subtracting MAX CONNTRACK from the response node, thus obtaining NAT information that requires translation.

If a hash value of a next= node can be obtained through the next of the header hash, then the data packet is just the data packet in the original direction. If the hash value of the storage position of the next of the header hash is different from that of the next, then the data packet is the data packet in the response direction.

According to the present invention, nodes are dynamically added by adopting a manner of a Hash table, which may greatly reduce searching of conflict chains, differs from one-by-one searching realized by the traditional bidirectional chain table, and greatly improves processing speed

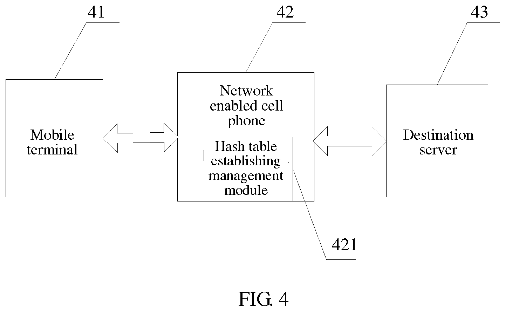

Based on the foregoing method for a mobile terminal to access the network through a cell phone provided by the present invention, the present invention further provides a system for a mobile terminal to access the network through a cell phone. The structural schematic view of the system is as shown in FIG.4, comprising: a mobile terminal 41, a network enabled cell phone 42 and a destination server 43.

The mobile terminal 41 establishes a point-to-point communication connection with the network enabled cell phone 42 through WIFI, and sends a data packet of the destination server 43 to the network enabled cell phone 42.

The network enabled cell phone 42 is used for extracting an element group in the data packet sent by the mobile terminal 41 at a network layer and saving the element group in a tuple structure, wherein the element group comprises a source address, a source port, a protocol type, a destination address and a destination port of the data packet. Moreover, the network enabled cell phone is used for carrying out source address NAT treatment on the element group, translating the source address of the data packet to an IP address for the dial-up networking of the cell phone, and distributing a dial-up networking port; and connecting the network enabled cell phone to the destination server 43 to communicate according to information of the treated element group.

The network enabled cell phone 42 further comprises: a Hash table establishing management module 421 used for pre-establishing a connection management Hash table used for tagging a network address mapping relationship in a network enabled cell phone, wherein a Hash value in the connection management Hash table is equal to a binary sum of a source address, a protocol type, a source port and a destination port.

The destination server 43 is used for being communicated with the mobile terminal 41 and the network enabled cell phone 42.

Wherein, the network enabled cell phone 42 is further used for searching the connection management Hash table according to the element group, determining whether a connection structure of the mobile terminal and the destination server exists in the connection management Hash table, defining the data packet as the first data packet and establishing a new connection structure in the Hash table if the connection structure does not exist in the connection management Hash table.

The network enabled cell phone 42 is further used for extracting connection management information represented by the connection structure, monitoring whether the current network requires FTP extension monitoring, updating a current connection management status, and carrying out NAT treatment on the data packet to realize communications between the mobile terminal 41 and the destination server 43 if the connection structure exists in the connection management Hash table.

According to the method and system for a mobile terminal to access the network through a cell phone provided in the present invention, the mobile terminal is connected to a network enabled cell phone via a WIFI connection mode, and the network enabled cell phone is served as a gateway router; with the TCP/IP operating principle, element information such as source address, source port, protocol, destination address and destination port in a data packet, is processed when the data packet arrives at the network layer of the network enabled cell phone, then a Hash table is dynamically established for searching the network connection, and NAT treatment is carried out to the data packet, thus the mobile terminal may simultaneously access the network with the network enabled cell phone by the external network IP address of the network enabled cell phone. As the two devices share one IP address to access the network, all the network flow is generated at the gateway cell phone, thus preventing any utilization cost of other devices; furthermore, the Hash table is dynamically established for the data packet in the present invention, which accelerates the search speed of the data packet and the processing speed.

## Claims

1. A method for a mobile terminal to access the network through a cell phone, comprising the steps of:
A. pre-establishing a connection management Hash table used for tagging a network address mapping relationship in a network enabled cell phone, wherein a Hash value in the connection management Hash table is equal to a modulus table length of a binary sum of a source address, a protocol type, a source port and a destination port;
B. establishing, by a mobile terminal, a point-to-point communication connection with the network enabled cell phone through WIFI, and sending a data packet of a destination server to the network enabled cell phone;
C. extracting, by the network enabled cell phone, an element group in the data packet sent by the mobile terminal at a network layer and saving the element group in a tuple structure, wherein the element group comprises a source address, a source port, a protocol type, a destination address and a destination port of the data packet;
D. carrying out, by the network enabled cell phone, NAT treatment on the element group, translating the source address of the data packet to an IP address for the dial-up networking of the cell phone, and distributing a dial-up networking port; and
E. connecting the network enabled cell phone to the destination server to communicate according to information of the treated element group;
wherein between the step C and the step D, further comprising the steps of:
- searching, by the network enabled cell phone, the connection management Hash table according to the element group, wherein searching the hash table is a hash-based lookup,
- determining whether a connection structure of the mobile terminal and the destination server exists in the connection management Hash table,
- defining the data packet as the first data packet and
- establishing a new connection structure in the Hash table if the connection structure does not exist in the connection management Hash table.

2. The method according to claim 1, wherein the step D further comprises the following step of:
- saving the element group after being subjected to source address NAT treatment in the connection management Hash table in form of a tuple structure.

3. The method according to claim 2, wherein when sending, by the destination server, a returned data packet to the mobile terminal, comprising the steps of sending the returned data packet to the network enabled cell phone first, extracting, by the network enabled cell phone, the element group in the returned data packet and searching the connection management Hash table to find a corresponding tuple structure, modifying the returned data packet according to the tuple structure and sending the modified returned data packet to the mobile terminal.

4. A system for a mobile terminal to access the network through a cell phone, comprising a mobile terminal and a network enabled cell phone, wherein:
- the mobile terminal establishes a point-to-point communication connection with the network enabled cell phone through WIFI, and sends a data packet of a destination server to the network enabled cell phone;
- the network enabled cell phone is used for extracting an element group in the data packet sent by the mobile terminal at a network layer and saving the element group in a tuple structure, wherein, the element group comprises a source address, a source port, a protocol type, a destination address and a destination port of the data packet; moreover, the network enabled cell phone is used for carrying out source address NAT treatment on the element group, translating the source address of the data packet to an IP address for the dial-up networking of the cell phone, and distributing a dial-up networking port; and being connected to the destination server to communicate according to information of the treated element group;
- the destination server is used for being communicated with the mobile terminal and the network enabled cell phone; and
- the network enabled cell phone comprises:
- a Hash table establishing management module used for pre-establishing a connection management Hash table used for tagging a network address mapping relationship in a network enabled cell phone, wherein a Hash value in the connection management Hash table is equal to a modulus table length of a binary sum of a source address, a protocol type, a source port and a destination port;
- wherein the network enabled cell phone is further used for searching the connection management Hash table according to the element group, wherein searching the hash table is a hash-based lookup, determining whether a connection structure of the mobile terminal and the destination server exists in the connection management Hash table, defining the data packet as the first data packet and establishing a new connection structure in the Hash table if the connection structure does not exist in the connection management Hash table.

5. The system for a mobile terminal to access the network through a cell phone according to claim 4, wherein the network enabled cell phone is used for saving the element group after being subjected to source address NAT treatment in the connection management Hash table in form of a tuple structure.

## Patentansprüche

1. Verfahren für ein mobiles Endgerät, um über ein Mobiltelefon auf ein Netz zuzugreifen, das die folgenden Schritte umfasst:
A. im Voraus Aufbauen einer Verbindungsmanagement-Hashtabelle, die verwendet wird, um eine Netzadresszuordnungsbeziehung in einem netzfähigen Mobiltelefon zu markieren, wobei ein Hashwert in der Verbindungsmanagement-Hashtabelle gleich einer Teilungsresttabellenlänge einer Binärsumme einer Quelladresse, eines Protokolltyps, eines Quellanschlusses und eines Zielanschlusses ist;
B. Aufbauen durch ein mobiles Endgerät einer Punktzu-Punkt-Kommunikationsverbindung mit dem netzfähigen Mobiltelefon über WIFI und Senden eines Datenpakets eines Ziel-Servers zum netzfähigen Mobiltelefon;
C. Extrahieren durch das netzfähige Mobiltelefon einer Elementgruppe im Datenpaket, das durch das mobile Endgerät gesendet wurde, auf einer Netzwerkschicht und Speichern der Elementgruppe in einer Tupelstruktur, wobei die Elementgruppe eine Quelladresse, einen Quellanschluss, einen Protokolltyp, eine Zieladresse und einen Zielanschluss des Datenpakets umfasst;
D. Ausführen durch das netzfähige Mobiltelefon einer NAT-Behandlung der Elementgruppe, eines Übersetzens der Quelladresse des Datenpakets in eine IP-Adresse zur Einwahlvernetzung des Mobiltelefons und eines Verteilens eines Einwahlvernetzungsanschlusses und
E. Verbinden des netzfähigen Mobiltelefons mit dem Ziel-Server, um gemäß Information der abgewickelten Elementgruppe zu kommunizieren; wobei
es zwischen dem Schritt C und dem Schritt D ferner die folgenden Schritte umfasst:
- Durchsuchen, durch das netzfähige Mobiltelefon der Verbindungsmanagement-Hashtabelle gemäß der Elementgruppe, wobei das Durchsuchen der Hash-Tabelle ein hashbasiertes Nachschlagen ist,
- Bestimmen, ob eine Verbindungsstruktur des mobilen Endgeräts und des Ziel-Servers in der Verbindungsmanagement-Hashtabelle existiert,
- Definieren des Datenpakets als das erste Datenpaket und
- Aufbauen einer neuen Verbindungsstruktur in der Hashtabelle, wenn die Verbindungsstruktur in der Verbindungsmanagement-Hashtabelle nicht existiert.

2. Verfahren nach Anspruch 1, wobei der Schritt D ferner den folgenden Schritt umfasst:
- Speichern der Elementgruppe, nachdem sie einer Quelladress-NAT-Behandlung in der Verbindungsmanagement-Hashtabelle unterworfen worden ist, in Form einer Tupelstruktur.

3. Verfahren nach Anspruch 2, das dann, wenn durch den Ziel-Server ein zurückgeschicktes Datenpaket zum mobilen Endgerät gesendet wird, die Schritte des Sendens des zurückgeschickten Datenpakets zuerst zum netzfähigen Mobiltelefon, des Extrahierens durch das netzfähige Mobiltelefon der Elementgruppe im zurückgeschickten Datenpaket und des Durchsuchens der Verbindungsmanagement-Hashtabelle, um eine entsprechende Tupelstruktur zu finden, des Änderns des zurückgeschickten Datenpakets gemäß der Tupelstruktur und des Sendes des geänderten zurückgegebenen Datenpakets zum mobilen Endgerät umfasst.

4. System für ein mobiles Endgerät, um über ein Mobiltelefon auf das Netz zuzugreifen, das ein mobiles Endgerät und ein netzfähiges Mobiltelefon umfasst, wobei
- das mobile Endgerät eine Punkt-zu-Punkt-Kommunikationsverbindung mit dem netzfähigen Mobiltelefon über WIFI aufbaut und ein Datenpaket eines Ziel-Servers zum netzfähigen Mobiltelefon sendet;
- das netzfähige Mobiltelefon verwendet wird, um eine Elementgruppe im Datenpaket, das durch das mobile Endgerät gesendet wurde, auf einer Netzwerkschicht zu extrahieren und die Elementgruppe in einer Tupelstruktur zu speichern, wobei die Elementgruppe eine Quelladresse, einen Quellanschluss, einen Protokolltyp, eine Zieladresse und einen Zielanschluss des Datenpakets umfasst; außerdem das netzaktivierte Mobiltelefon verwendet wird, um eine NAT-Behandlung an der Elementgruppe, ein Übersetzen der Quelladresse des Datenpakets in eine IP-Adresse zur Einwahlvernetzung des Mobiltelefons und ein Verteilen eines Einwahlvernetzungsanschlusses auszuführen; und mit dem Ziel-Server verbunden ist, um gemäß Information der behandelten Elementgruppe zu kommunizieren;
- der Ziel-Server verwendet wird, um mit dem mobilen Endgerät und dem netzfähigen Mobiltelefon in Verbindung zu stehen; und
- das netzfähige Mobiltelefon Folgendes umfasst:
- ein Hashtabellen-Aufbaumanagementmodul, das zum im Voraus Aufbauen einer Verbindungsmanagement-Hashtabelle verwendet wird, die zum Markieren einer Netzadresszuordnungsbeziehung in einem netzfähigen Mobiltelefon verwendet wird, wobei ein Hashwert in der Verbindungsmanagement-Hashtabelle gleich einer Teilungsresttabellenlänge einer Binärsumme einer Quelladresse, eines Protokolltyps, eines Quellanschlusses und eines Zielanschlusses ist; wobei
- das netzfähige Mobiltelefon ferner verwendet wird, um die Verbindungsmanagement-Hashtabelle gemäß der Elementgruppe zu durchsuchen, wobei das Durchsuchen der Hashtabelle ein hashbasiertes Nachschlagen ist, zu bestimmen, ob eine Verbindungsstruktur des mobilen Endgeräts und des Ziel-Servers in der Verbindungsmanagement-Hashtabelle existiert, das Datenpaket als das erste Datenpaket zu definieren und eine neue Verbindungsstruktur in der Hashtabelle aufzubauen, wenn die Verbindungsstruktur in der Verbindungsmanagement-Hashtabelle nicht existiert.

5. System für ein mobiles Endgerät, um über ein Mobiltelefon auf das Netz zuzugreifen, nach Anspruch 4, wobei das netzfähige Mobiltelefon verwendet wird, um die Elementgruppe, nachdem sie einer Quelladress-NAT-Abwicklung in der Verbindungsmanagement-Hashtabelle unterworfen worden ist, in Form einer Tupelstruktur zu speichern.

## Revendications

1. Procédé permettant à un terminal mobile d'accéder au réseau par l'intermédiaire d'un téléphone cellulaire, le procédé comprenant les étapes suivantes :
A. pré-établir une table de hachage de gestion des connexions utilisée pour baliser une relation de mappage d'adresse de réseau dans un téléphone cellulaire compatible réseau, où une valeur de hachage dans la table de hachage de gestion des connexions est égale à une longueur de table de module d'une somme binaire d'une adresse source, d'un type de protocole, d'un port source et d'un port de destination ;
B. établir, au moyen d'un terminal mobile, une connexion de communication point à point avec le téléphone cellulaire compatible réseau par WIFI, et envoyer un paquet de données d'un serveur de destination au téléphone cellulaire compatible réseau ;
C. extraire, par le téléphone cellulaire compatible réseau, un groupe d'éléments dans le paquet de données envoyé par le terminal mobile au niveau d'une couche réseau et sauvegarder le groupe d'éléments dans une structure tuple, où le groupe d'éléments comprend une adresse source, un port source, un type de protocole, une adresse de destination et un port de destination du paquet de données ;
D. effectuer, au moyen du téléphone cellulaire compatible réseau, un traitement NAT sur le groupe d'éléments, traduire l'adresse source du paquet de données en une adresse IP pour la connexion réseau commuté du téléphone cellulaire, et distribuer un port de connexion réseau commuté ; et
E. connecter le téléphone cellulaire compatible réseau au serveur de destination pour communiquer conformément aux informations du groupe d'éléments traités ;
où entre l'étape C et l'étape D, le procédé comprend en outre les étapes suivantes :
- effectuer des recherches, par le téléphone cellulaire compatible réseau, dans la table de hachage de gestion des connexions conformément au groupe d'éléments, où la recherche dans la table de hachage est une consultation basée sur le hachage,
- déterminer si une structure de connexion du terminal mobile et du serveur de destination existe dans la table de hachage de gestion des connexions,
- définir le paquet de données en tant que premier paquet de données, et
- établir une nouvelle structure de connexion dans la table de hachage si la structure de connexion n'existe pas dans la table de hachage de gestion des connexions.

2. Procédé selon la revendication 1, dans lequel l'étape D comprend en outre l'étape suivante :
- sauvegarder le groupe d'éléments après qu'il a été soumis à un traitement NAT d'adresse source dans la table de hachage de gestion des connexions sous la forme d'une structure tuple.

3. Procédé selon la revendication 2, dans lequel lors de l'envoi, par le serveur de destination, d'un paquet de données retourné au terminal mobile, le procédé comprend les étapes comprenant d'envoyer tout d'abord le paquet de données retourné au téléphone cellulaire compatible réseau, d'extraire, par le téléphone cellulaire compatible réseau, le groupe d'éléments dans le paquet de données retourné et d'effectuer une recherche dans la table de hachage de gestion des connexions pour trouver une structure tuple correspondante, de modifier le paquet de données retourné conformément à la structure tuple et d'envoyer le paquet de données retourné modifié au terminal mobile.

4. Système permettant à un terminal mobile d'accéder au réseau par l'intermédiaire d'un téléphone cellulaire, le système comprenant un terminal mobile et un téléphone cellulaire compatible réseau, où :
- le terminal mobile établit une connexion de communication point à point avec le téléphone cellulaire compatible réseau par WIFI, et envoie un paquet de données d'un serveur de destination au téléphone cellulaire compatible réseau ;
- le téléphone cellulaire compatible réseau est utilisé pour extraire un groupe d'éléments dans le paquet de données envoyé par le terminal mobile au niveau d'une couche réseau et pour sauvegarder le groupe d'éléments dans une structure tuple, où le groupe d'éléments comprend une adresse source, un port source, un type de protocole, une adresse de destination et un port de destination du paquet de données ; en outre, le téléphone cellulaire compatible réseau est utilisé pour effectuer un traitement NAT d'adresse source sur le groupe d'éléments, traduire l'adresse source du paquet de données en une adresse IP pour la connexion réseau commuté du téléphone cellulaire, et distribuer un port de connexion réseau commuté ; et être connecté au serveur de destination pour communiquer conformément aux informations du groupe d'éléments traités ;
- le serveur de destination est utilisé pour communiquer avec le terminal mobile et le téléphone cellulaire compatible réseau ; et
- le téléphone cellulaire compatible réseau comprend :
- un module de gestion d'établissement de table de hachage utilisé pour préétablir une table de hachage de gestion des connexions utilisée pour baliser une relation de mappage d'adresse de réseau dans un téléphone cellulaire compatible réseau, où une valeur de hachage dans la table de hachage de gestion des connexions est égale à une longueur de table de module d'une somme binaire d'une adresse source, d'un type de protocole, d'un port source et d'un port de destination ;
- où le téléphone cellulaire compatible réseau est en outre utilisé pour effectuer une recherche dans la table de hachage de gestion des connexions conformément au groupe d'éléments, la recherche dans la table de hachage étant une consultation basée sur le hachage, déterminer si une structure de connexion du terminal mobile et du serveur de destination existe dans la table de hachage de gestion des connexions, définir le paquet de données en tant que premier paquet de données et établir une nouvelle structure de connexion dans la table de hachage si la structure de connexion n'existe pas dans la table de hachage de gestion des connexions.

5. Système permettant à un terminal mobile d'accéder au réseau par l'intermédiaire d'un téléphone cellulaire selon la revendication 4, dans lequel le téléphone cellulaire compatible réseau est utilisé pour sauvegarder le groupe d'éléments après qu'il a été soumis à un traitement NAT d'adresse source dans la table de hachage de gestion des connexions sous la forme d'une structure tuple.
